# FASCICULE DE BREVET EUROPEEN

(11) **EP 3 749 533 B1**
(45) Date de publication et mention de la délivrance du brevet: **02.03.2022**
(21) Numéro de dépôt: 19707434.7
(22) Date de dépôt: 30.01.2019
(51) Int. Cl.: B60G 13/00, B60G 21/05, B60G 7/00, F16F 9/32

(54) **AMORTISSEUR DE SUSPENSION DE VEHICULE COMPRIME AVEC UNE SANGLE DE MAINTIEN ET PROCEDE DE MONTAGE ASSOCIE**
STOSSDÄMPFER FÜR FAHRZEUGE MIT HALTEBAND UND ZUGEHÖRIGES MONTAGEVERFAHREN
VEHICLE SHOCK ABSORBER WITH A HOLDING STRAP AND ASSOCIATED MOUNTING METHOD

(30) Priorité: 09.02.2018 FR 1851118
(43) Date de publication de la demande: 16.12.2020
(73) Titulaire: PSA Automobiles SA, 78300 Poissy (FR)
(72) Inventeur: LE COSQUER, Yannick, 25350 Mandeure (FR); ROUSSEY, Philippe, 25150 Pont De Roide - Vermondans (FR)
(86) Numéro de dépôt international: PCT/FR2019/050212
(87) Numéro de publication internationale: WO 2019/155141

(56) Documents cités:
- FR-A1- 3 026 059
- FR-A1- 3 043 360
- US-A- 5 171 036

## Description

L'invention a trait au domaine de l'assemblage de véhicules automobiles, plus particulièrement au montage d'un train roulant sur une caisse de véhicule automobile. Le procédé de montage d'un train roulant sur une caisse de véhicule comprend la manipulation d'éléments de suspension, généralement des ressorts de suspension, ainsi que des amortisseurs de suspension. Un amortisseur ayant une longueur à vide plus importante qu'en mode de travail, il est généralement nécessaire de le maintenir en compression lors de son montage. Un maintien en compression de qualité et en toute sécurité est d'autant plus nécessaire que l'assemblage est généralement réalisé dans une zone difficile d'accès, voire confinée, pour des véhicules compacts.

Dans le cas d'amortisseurs télescopiques disposés sensiblement verticalement à l'arrière du véhicule, il est connu pour l'assemblage des véhicules dans une première étape de fixer à un poste de préparation l'articulation inférieure de ces amortisseurs sur le train arrière du véhicule. Dans une étape suivante la caisse du véhicule est descendue sur le train arrière, puis l'articulation supérieure des amortisseurs est fixée sur cette caisse. Pour des amortisseurs télescopiques comprenant des ressorts de détente intégrés, il est connu un dispositif de maintien de ces amortisseurs dans une position comprimée.

Ainsi, le document FR-A1- 3026059 propose un amortisseur de suspension pour véhicule automobile, comprenant un corps de forme tubulaire, une tige avec un piston coulissant dans le corps et des crochets fixés latéralement à la tige, lesdits crochets étant configurés pour permettre la fixation d'une sangle de maintien de l'amortisseur dans un état comprimé, ladite sangle entourant le corps.

Après la mise en place de la caisse du véhicule sur le train arrière, un opérateur coupe la sangle de chaque amortisseur pour les laisser se détendre, puis fixe l'articulation supérieure à la carrosserie.

En particulier lors de la montée de la tige de l'amortisseur, l'articulation supérieure peut venir en appui sur une surface d'appui sensiblement horizontale tournée vers le bas d'un support supérieur fixé dans un passage de roue de la carrosserie. On engage ensuite des vis de fixation de l'articulation supérieure de l'amortisseur sur le support, pour fixer définitivement cet amortisseur.

Toutefois, dans le cas où la fixation de l'articulation inférieure sur le train roulant est orientée perpendiculaire à la fixation de l'articulation supérieure sur la caisse, l'opérateur se doit d'assurer cette orientation pour permettre le vissage de l'articulation supérieure sur la caisse.

C'est pourquoi, la présente invention a notamment pour but d'éviter à l'opérateur d'orienter l'une par rapport à l'autre, les articulations inférieure et supérieure sur sa ligne de montage, tout en maintenant la tige de l'amortisseur à une longueur définie pour l'assemblage sur le véhicule.

Elle propose à cet effet un assemblage composé d'un amortisseur télescopique de suspension de véhicule automobile comprimé avec une sangle de maintien à l'état tendu, l'amortisseur comportant une articulation inférieure dotée d'un premier axe de fixation sur le train roulant du véhicule, et une articulation supérieure dotée d'un second axe de fixation sur un support de la caisse du véhicule, ledit second axe étant formé d'une barre dont les extrémités s'étendent de part et d'autre de l'articulation supérieure, le premier axe et le second axe s'étendant chacun de manière sensiblement perpendiculaire par rapport à l'axe longitudinal de l'amortisseur, caractérisé en ce que la sangle prend appui au moins sous l'articulation inférieure et sur chacune des extrémités de la barre de fixation de l'articulation supérieure, de sorte que le premier axe et le second axe sont orientés perpendiculairement l'un par rapport à l'autre.

Cet agencement permet ainsi d'une part de maintenir l'amortisseur en compression, et permet d'autre part d'orienter de manière permanente le premier axe de fixation de l'articulation inférieure sur le train roulant du véhicule, perpendiculairement au second axe de fixation de l'articulation supérieure sur la caisse.

Selon un premier mode de réalisation, la sangle est une courroie continue présentant au moins un enroulement autour de chacune des extrémités de la barre de fixation de l'articulation supérieure.

Selon un second mode de réalisation, la sangle comporte une première extrémité et une seconde extrémité dotées chacune d'un moyen de retenue coopérant respectivement avec l'une des l'une des extrémités de la barre de fixation de l'articulation supérieure.

Dans le cadre du second mode de réalisation, chacun des moyens de retenue peut avantageusement être constitué par le dédoublement de la sangle sur une certaine longueur et au niveau de chacune des première et seconde extrémités, en au moins deux brins et suivant son épaisseur, de sorte que lesdits moyens de retenue forment chacun une boucle traversée par respectivement l'une et l'autre des extrémités de la barre de fixation de l'articulation supérieure.

Avantageusement, l'articulation inférieure peut être un manchon de forme sensiblement cylindrique creusé en sa surface circonférentielle extérieure d'une rainure prévue pour accueillir la sangle en appui.

Avantageusement, chacune des extrémités de la barre de fixation de l'articulation supérieure peut comporter une encoche prévue pour accueillir la sangle en appui.

Avantageusement, la sangle peut être constituée d'un matériau élastique du type élastomère.

L'invention a également pour objet un véhicule automobile équipé d'un assemblage composé d'un amortisseur télescopique de suspension de véhicule automobile comprimé avec une sangle de maintien, conforme à un mode de réalisation de l'invention.

L'invention a également pour objet un procédé de montage d'un amortisseur télescopique de suspension sur la caisse d'un véhicule automobile, l'amortisseur comportant une articulation inférieure dotée d'un premier axe de fixation sur le train roulant du véhicule, et une articulation supérieure dotée d'un second axe de fixation sur un support de la caisse du véhicule, ledit second axe étant formé d'une barre dont les extrémités s'étendent de part et d'autre de l'articulation supérieure, le premier axe et le second axe s'étendant chacun de manière sensiblement perpendiculaire par rapport à l'axe longitudinal Z de l'amortisseur, ledit procédé comportant une étape préliminaire de mise en compression dudit amortisseur au moyen d'une sangle selon l'assemblage conforme à un mode de réalisation de l'invention.

Il s'ensuit une simplification du montage de l'amortisseur de suspension sur la caisse du véhicule automobile, en ce sens que l'opérateur n'a plus besoin, sur la ligne de montage, d'orienter l'une par rapport à l'autre, les articulations inférieure et supérieure de l'amortisseur. D'autres avantages et particularités de l'invention apparaîtront à la lecture de la description détaillée de mises en œuvre et de modes de réalisation nullement limitatifs, et des dessins annexés suivants :
- La figure 1 est une vue en perspective d'un train roulant de véhicule automobile comprenant deux amortisseurs de suspension conformes à l'invention.
- La figure 2 est une vue en perspective du montage d'un amortisseur de suspension sur le train roulant et la caisse, selon l'invention.
- La figure 3a est une vue en perspective d'un premier mode de réalisation de l'assemblage d'un amortisseur télescopique de suspension de véhicule automobile comprimé avec une sangle de maintien, selon l'invention.
- La figure 3b est une vue en perspective de la sangle de maintien selon le premier mode de réalisation.
- La figure 4a est une vue en perspective d'un second mode de réalisation de l'assemblage d'un amortisseur télescopique de suspension de véhicule automobile comprimé avec une sangle de maintien, selon l'invention.
- La figure 4b est une vue en perspective de la sangle de maintien selon le second mode de réalisation.

A des fins de clarté et de concision, les références sur les figures correspondent aux mêmes éléments.

Les modes de réalisation décrits ci-après étant nullement limitatifs, on pourra notamment considérer des variantes de l'invention ne comprenant qu'une sélection de caractéristiques décrites, isolées des autres caractéristiques décrites (même si cette sélection est isolée au sein d'une phrase comprenant ces autres caractéristiques), si cette sélection de caractéristiques est suffisante pour conférer un avantage technique ou pour différencier l'invention par rapport à l'état de la technique antérieure. Cette sélection comprend au moins une caractéristique, de préférence fonctionnelle sans détails structurels, ou avec seulement une partie des détails structurels si cette partie uniquement est suffisante pour conférer un avantage technique ou pour différencier l'invention par rapport à l'état de la technique antérieure.

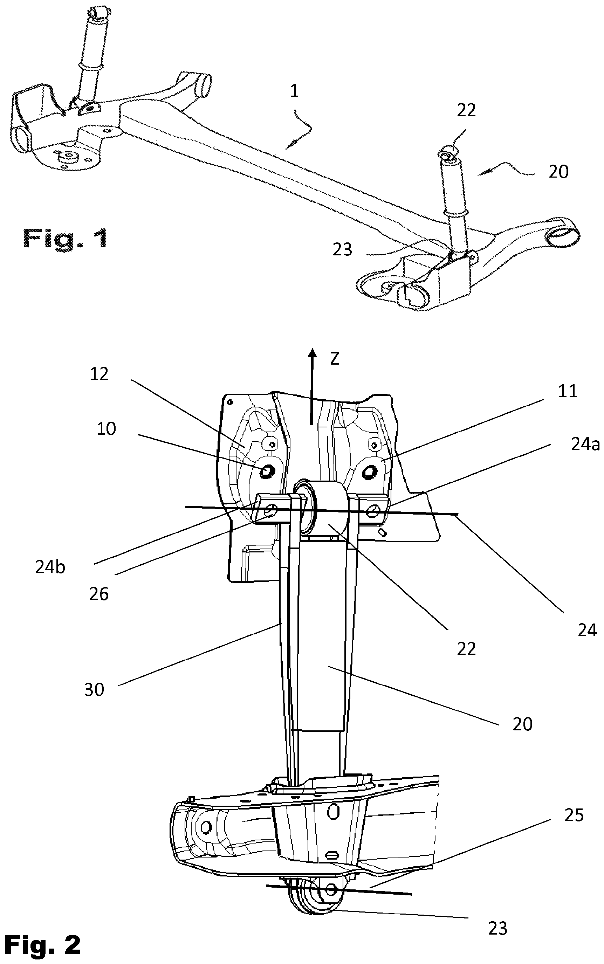

La figure 1 représente une vue en perspective d'un train roulant 1 de véhicule automobile comprenant deux amortisseurs de suspension 20 dont l'articulation inférieure 23 est fixée au train roulant.

Sur la figure 2, on a représenté en perspective un amortisseur de suspension 20 selon l'invention, en détaillant la fixation sur le train roulant et la caisse. L'amortisseur comprend de manière classique un corps de forme tubulaire, une tige avec un piston coulissant dans le corps, la tige et le corps permettant de réaliser la fonction principale d'amortissement des débattements de la suspension du véhicule.

L'amortisseur comporte une articulation inférieure 23 dotée d'un premier axe 25 permettant la fixation de ladite articulation sur le train roulant du véhicule, et une articulation supérieure 22 dotée d'un second axe 24 permettant la fixation de ladite articulation sur un support 12 de la caisse du véhicule.

Le second axe est constitué d'une barre dont les extrémités 24a, 24b s'étendent de part et d'autre de l'articulation supérieure. Chacune des extrémités 24a, 24b comporte un perçage 26 recevant une vis de serrage qui se visse dans l'insert taraudé 10 de chaque face d'appui 11 de la caisse.

Le premier axe et le second axe s'étendent chacun de manière sensiblement perpendiculaire par rapport à l'axe longitudinal Z de l'amortisseur.

La sangle 30 maintient l'amortisseur 20 dans un état comprimé en prenant appui sous l'articulation inférieure 23 et sur chacune des extrémités 24a, 24b de la barre de fixation de l'articulation supérieure. De cette façon, le premier axe 25 et le second axe 24 sont orientés perpendiculairement l'un par rapport à l'autre.

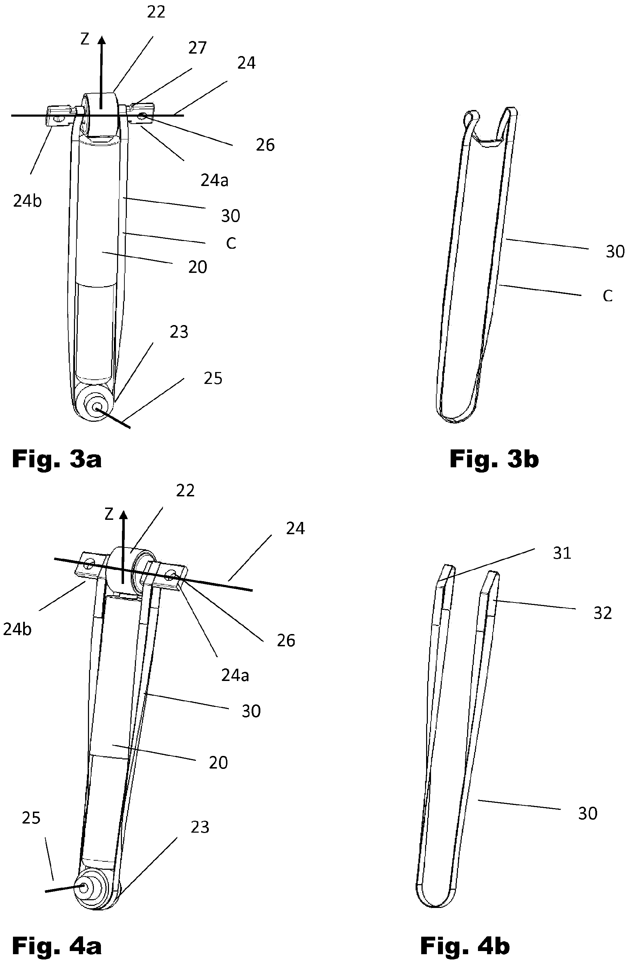

Selon le premier mode de réalisation représenté sur les figures 3a et 3b, la sangle est une courroie C continue présentant au moins un enroulement autour de chacune des extrémités 24a, 24b de la barre de fixation de l'articulation supérieure. On entend par courroie continue, une bande en matériau souple et résistant dont les deux extrémités sont réunies.

Plus précisément, du côté de l'articulation supérieure 22, la courroie C passe le long de la base de l'articulation supérieure et s'enroule autour de chacune des extrémités 24a, 24b de la barre formant le second axe 24. Du côté opposé à l'articulation supérieure 22, la courroie C passe, tendue, sous l'articulation inférieure 23.

L'enroulement autour des extrémités 24a, 24b peut prendre différentes formes. Ainsi, l'enroulement peut comprendre un ou plusieurs tours. Il peut aussi être opéré dans le sens trigonométrique ou bien dans le sens inverse au sens trigonométrique.

Selon le second mode de réalisation représenté sur les figures 4a et 4b, la sangle comporte une première extrémité 31 et une seconde extrémité 32 dotées chacune d'un moyen de retenue coopérant respectivement avec l'une des extrémités 24a, 24b de la barre formant le second axe 24. Du côté de l'articulation inférieure 23, la sangle passe, tendue, sous l'articulation inférieure 23.

Selon un mode préféré, chacun des moyens de retenue est constitué par le dédoublement de la sangle sur une certaine longueur au niveau de chacune des première et seconde extrémités, en au moins deux brins et suivant son épaisseur, de sorte que lesdits moyens de retenue forment chacun une boucle traversée par respectivement l'une des extrémités 24a, 24b de la barre de fixation de l'articulation supérieure. On entend par « dédoublement de la sangle suivant son épaisseur », le fait qu'en chacune de ses extrémités, la sangle se divise en deux brins dans le sens de l'épaisseur, qui reconstituent la sangle sur toute son épaisseur lorsqu'on les superpose l'un sur l'autre.

Selon d'autres modes de réalisation non représentés, les moyens de retenue pourraient être des crochets prolongeant les première et seconde extrémités de la sangle.

De manière avantageuse, et indépendamment des modes mentionnés précédemment, l'articulation inférieure 23 est un manchon de forme sensiblement cylindrique creusé en sa surface circonférentielle extérieure d'une rainure prévue pour accueillir la sangle en appui. Ainsi, la sangle en tension est maintenue dans sa position autour de l'articulation inférieure 23.

De manière tout aussi préférentielle et indépendamment des modes mentionnés précédemment, et tel que représenté sur la figure 3a, chacune des extrémités 24a, 24b de la barre de fixation de l'articulation supérieure comporte une encoche 27 prévue pour accueillir la sangle en appui. Ainsi, la sangle en tension est maintenue dans sa position autour des extrémités 24a, 24b de la barre.

De manière à faciliter la mise en tension de la sangle, cette dernière peut être réalisée dans un matériau élastique du type élastomère.

L'assemblage de l'amortisseur avec la sangle tel qu'exposé précédemment permet d'une part de maintenir l'amortisseur en compression et permet d'autre part d'orienter de manière permanente le premier axe 25 de fixation de l'articulation inférieure 23 sur le train roulant du véhicule, perpendiculairement au second axe 24 de fixation de l'articulation supérieure 22 sur la caisse.

Il s'ensuit une simplification du montage d'un tel amortisseur de suspension sur la caisse d'un véhicule automobile, en ce sens que l'opérateur n'a plus besoin, sur sa ligne de montage, d'orienter l'une par rapport à l'autre, les articulations inférieure et supérieure.

Ainsi, le montage comporte une étape préliminaire de mise en compression dudit amortisseur au moyen d'une sangle selon l'assemblage selon l'invention, cette étape pouvant être réalisée en dehors de la chaîne de montage.

Puis, s'ensuit la fixation de l'articulation inférieure (respectivement supérieure) sur le train roulant (respectivement la caisse).

Puis, on procède à l'accostage de la caisse sur le train roulant. Une fois l'amortisseur libéré de sa sangle, on peut procéder à la fixation de l'autre articulation qui est venue en appui sur sa partie dédiée selon une orientation correcte.

La présente invention permet d'éviter à l'opérateur d'orienter l'une par rapport à l'autre, les articulations inférieure et supérieure de l'amortisseur lors du montage et permet aussi de maintenir la tige de l'amortisseur à une longueur définie pour l'assemblage sur le véhicule.

Bien sûr, l'invention n'est pas limitée aux exemples qui viennent d'être décrits et de nombreux aménagements peuvent être apportés à ces exemples sans sortir du cadre de l'invention qui est définie par les revendications.

De plus, les différentes caractéristiques, formes, variantes et modes de réalisation de l'invention peuvent être associés les uns avec les autres selon diverses combinaisons dans la mesure où ils ne sont pas incompatibles ou exclusifs les uns des autres.

## Revendications

1. - Assemblage composé d'un amortisseur télescopique de suspension (20) de véhicule automobile comprimé avec une sangle de maintien (30), l'amortisseur comportant une articulation inférieure (23) dotée d'un premier axe (25) de fixation sur le train roulant du véhicule, et une articulation supérieure (22) dotée d'un second axe (24) de fixation sur un support (12) de la caisse du véhicule, ledit second axe étant formé d'une barre dont les extrémités (24a, 24b) s'étendent de part et d'autre de l'articulation supérieure, le premier axe (25) et le second axe (24) s'étendant chacun de manière sensiblement perpendiculaire par rapport à l'axe longitudinal (Z) de l'amortisseur, **caractérisé en ce que** la sangle prend appui au moins sous l'articulation inférieure (23) et sur chacune des extrémités (24a, 24b) de la barre de fixation de l'articulation supérieure, de sorte que le premier axe (25) et le second axe (24) sont orientés perpendiculairement l'un par rapport à l'autre.

2. - Assemblage selon la revendication 1, **caractérisé en ce que** la sangle (30) est une courroie (C) continue présentant au moins un enroulement autour de chacune des extrémités (24a, 24b) de la barre de fixation de l'articulation supérieure.

3. - Assemblage selon la revendication 1, **caractérisé en ce que** la sangle comporte une première extrémité (31) et une seconde extrémité (32) dotées chacune d'un moyen de retenue coopérant respectivement avec l'une des extrémités (24a, 24b) de la barre de fixation de l'articulation supérieure.

4. - Assemblage selon la revendication 3, **caractérisé en ce que** chacun des moyens de retenue est constitué par le dédoublement de la sangle sur une certaine longueur au niveau de chacune des première et seconde extrémités, en au moins deux brins et suivant son épaisseur, de sorte que lesdits moyens de retenue forment chacun une boucle traversée par l'une des extrémités (24a, 24b) de la barre de fixation de l'articulation supérieure.

5. - Assemblage selon l'une quelconque des revendications précédentes, **caractérisé en ce que** l'articulation inférieure (23) est un manchon de forme sensiblement cylindrique creusé en sa surface circonférentielle extérieure d'une rainure prévue pour accueillir la sangle en appui.

6. - Assemblage selon l'une quelconque des revendications précédentes, **caractérisé en ce que** chacune des extrémités (24a, 24b) de la barre de fixation de l'articulation supérieure comporte une encoche (27) prévue pour accueillir la sangle en appui.

7. - Assemblage selon l'une quelconque des revendications précédentes, **caractérisé en ce que** la sangle est constituée d'un matériau élastique du type élastomère.

8. - Véhicule automobile **caractérisé en ce qu'**il est équipé d'un assemblage composé d'un amortisseur télescopique de suspension (20) de véhicule automobile comprimé avec une sangle de maintien (30), conforme à l'une quelconque des revendications 1 à 7.

9. - Procédé de montage d'un amortisseur télescopique de suspension (20) sur la caisse d'un véhicule automobile, l'amortisseur comportant une articulation inférieure (23) dotée d'un premier axe (25) de fixation sur le train roulant du véhicule, et une articulation supérieure (22) dotée d'un second axe (24) de fixation sur un support de la caisse du véhicule, ledit second axe étant formé d'une barre dont les extrémités (24a, 24b) s'étendent de part et d'autre de l'articulation supérieure, le premier axe et le second axe s'étendant chacun de manière sensiblement perpendiculaire par rapport à l'axe longitudinal (Z) de l'amortisseur, **caractérisé en ce qu'**il comporte une étape préliminaire de mise en compression dudit amortisseur au moyen d'une sangle (30) selon l'assemblage conforme à l'une quelconque des revendications 1 à 7.

## Patentansprüche

1. - Anordnung bestehend aus einem Teleskopfederungsstoßdämpfer (20) eines zusammengedrückten Kraftfahrzeugs mit einem Halteband (30), wobei der Stoßdämpfer ein unteres Gelenk (23) umfasst, das mit einer ersten Achse (25) zur Befestigung am Fahrwerk des Fahrzeug, und ein oberes Gelenk (22), das mit einer zweiten Achse (24) zur Befestigung an einem Träger (12) der Fahrzeugkarosserie versehen ist, wobei die zweite Achse aus einer Stange besteht, deren Enden (24a, 24b) sich zu beiden Seiten des Fahrzeugs erstrecken das obere Gelenk, die erste Achse (25) und die zweite Achse (24) sich jeweils im Wesentlichen senkrecht zur Längsachse (Z) des Stoßdämpfers erstrecken, **dadurch gekennzeichnet, dass** der Bügel zumindest unter dem unteren Gelenk (23) und auf jedes der Enden (24a, 24b) der Befestigungsstange des oberen Gelenks, so dass die erste Achse (25) und die zweite Achse (24) senkrecht zueinander ausgerichtet sind.

2. - Anordnung nach Anspruch 1, **dadurch gekennzeichnet, dass** das Band (30) ein Endlosband (C) ist, das mindestens eine Windung um jedes der Enden (24a, 24b) der Befestigungsstange des oberen Gelenks aufweist.

3. - Anordnung nach Anspruch 1, **dadurch gekennzeichnet, dass** das Band weist ein erstes Ende (31) und ein zweites Ende (32) auf, die jeweils mit einem Haltemittel versehen sind, das jeweils mit einem der Enden (24a, 24b) der Befestigungsstange des oberen Gelenks zusammenwirkt.

4. - Anordnung nach Anspruch 3, **dadurch gekennzeichnet, dass** jede der das Haltemittel besteht aus dem Aufdoppeln des Bandes über eine bestimmte Länge an jedem der ersten und zweiten Enden, in mindestens zwei Stränge und in Abhängigkeit von seiner Dicke, so dass die Haltemittel jeweils eine Schlaufe bilden, durch die das eine der Enden (24a, 24b) der oberen Gelenkbefestigungsstange.

5. - Anordnung nach einem der vorhergehenden Ansprüche, **dadurch gekennzeichnet, dass** das untere Gelenk (23) eine geformte Hülse ist im wesentlichen zylindrisch, in seiner äußeren Umfangsfläche ausgehöhlt, mit einer Nut, die vorgesehen ist, um das Band in Stütze aufzunehmen.

6. - Anordnung nach einem der vorhergehenden Ansprüche, **dadurch gekennzeichnet, dass** jedes der Enden (24a, 24b) des das Fixieren des oberen Gelenks umfasst eine Kerbe (27), die vorgesehen ist, um den Riemen stützend aufzunehmen.

7. - Anordnung nach einem der vorhergehenden Ansprüche, **dadurch gekennzeichnet,dass** das Band aus einem elastischen Material vom Elastomertyp besteht.

8. - Kraftfahrzeug, **dadurch gekennzeichnet, dass** es mit einer Baugruppe ausgestattet ist bestehend aus einem mit einem Halteband (30) zusammengedrückten teleskopierbaren Kraftfahrzeug-Aufhängungsstoßdämpfer (20) nach einem der Ansprüche 1 bis 7.

9. - Montageverfahren für einen Teleskopstoßdämpfer (20) an der Karosserie eines Kraftfahrzeugs, wobei der Stoßdämpfer ein unteres Gelenk (23) umfasst, das mit einer ersten Achse (25) zur Befestigung am Fahrwerk des Fahrzeugs versehen ist, und ein oberes Gelenk (22), das mit einer zweiten Achse (24) versehen ist zur Befestigung an einem Träger der Fahrzeugkarosserie, wobei die zweite Achse aus einer Stange besteht, deren Enden (24a, 24b) sich zu beiden Seiten des oberen Gelenks erstrecken, wobei die erste Achse und die zweite Achse jeweils im Wesentlichen senkrecht zur Längsachse verlaufen (Z) des Stoßdämpfers, **dadurch gekennzeichnet, dass** er einen vorbereitenden Schritt des Zusammendrückens des Stoßdämpfers mittels eines Riemens (30) gemäß der Anordnung nach einem der Ansprüche 1 bis 7 umfasst.

## Claims

1. - Assembly composed of a telescopic suspension shock absorber (20) of a compressed motor vehicle with a retaining strap (30), the shock absorber comprising a lower articulation (23) provided with a first axis (25) for fixing to the running gear of the vehicle, and an upper articulation (22) provided with a second axis (24) for fixing on a support (12) of the vehicle body, said second axis being formed of a bar whose ends (24a, 24b) extend on either side of the upper articulation, the first axis (25) and the second axis (24) each extending substantially perpendicular to the longitudinal axis (Z) of the shock absorber, **characterized in that** the strap bears at least under the lower articulation (23) and on each of the ends (24a, 24b) of the fixing bar of the upper articulation, so that the first axis (25) and the second axis (24) are oriented perpendicular to each other.

2. - Assembly according to claim 1, **characterized in that** the strap (30) is a continuous belt (C) having at least one winding around each of the ends (24a, 24b) of the fixing bar of the upper joint.

3. - Assembly according to claim 1, **characterized in that** the strap comprises a first end (31) and a second end (32) each provided with a retaining means cooperating respectively with one of the ends (24a, 24b) of the fixing bar of the upper joint.

4. - Assembly according to claim 3, **characterized in that** each of the retaining means is constituted by the doubling of the strap over a certain length at each of the first and second ends, in at least two strands and depending on its thickness, so that said retaining means each form a loop through which the one of the ends (24a, 24b) of the upper joint fixing bar.

5. - Assembly according to any one of the preceding claims, **characterized in that** the lower joint (23) is a shaped sleeve substantially cylindrical hollowed out in its outer circumferential surface with a groove provided to accommodate the strap in support.

6. - Assembly according to any one of the preceding claims, **characterized in that** each of the ends (24a, 24b) of the fixing of the upper articulation comprises a notch (27) provided to receive the strap in support.

7. - Assembly according to any one of the preceding claims, **characterized in that** the strap is made of an elastic material of the elastomer type.

8. - Motor vehicle **characterized in that** it is equipped with an assembly composed of a telescopic motor vehicle suspension shock absorber (20) compressed with a retaining strap (30), according to any one of claims 1 to 7.

9. - Method of mounting a telescopic suspension shock absorber (20) on the body of a motor vehicle, the shock absorber comprising a lower articulation (23) provided with a first axis (25) for fixing to the running gear of the vehicle, and an upper articulation (22) provided with a second axis (24) for fixing on a support of the vehicle body, said second axis being formed of a bar whose ends (24a, 24b) extend on either side of the upper articulation, the first axis and the second axis each extending substantially perpendicular to the longitudinal axis (Z) of the shock absorber, **characterized in that** it comprises a preliminary step of compressing said shock absorber by means of a strap (30) according to the assembly according to any one of claims 1 to 7.
